(19)

**Europäisches Patentamt**
**European Patent Office**
**Office européen des brevets**

(11) **EP 4 730 208 A1**

(12) **EUROPEAN PATENT APPLICATION**

(43) Date of publication:
**22.04.2026 Bulletin 2026/17**

(21) Application number: **24383140.1**

(22) Date of filing: **17.10.2024**

(51) International Patent Classification (IPC):
**G06N 3/098** (2023.01)     **G06N 3/084** (2023.01)
**G06N 3/09** (2023.01)

(52) Cooperative Patent Classification (CPC):
**G06N 3/098; G06N 3/084; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Telefónica Innovación Digital, S.L.**
**28050 Madrid (ES)**

(72) Inventors:
• **Corbucci, Luca**
 **28050 Madrid (ES)**
• **Heikkilä, Mikko A.**
 **28050 Madrid (ES)**
• **Solans, David**
 **28050 Madrid (ES)**
• **Kourtellis, Nicolas**
 **28050 Madrid (ES)**

(74) Representative: **Carlos Hernando, Borja**
 **Garrigues IP, S.L.P.**
 **Plaza de Colón, 2**
 **28046 Madrid (ES)**

(54) **METHOD, SYSTEM AND COMPUTER PROGRAM TO BALANCE PRIVACY, UTILITY AND FAIRNESS IN FEDERATED LEARNING**

(57)    A method, system and computer program to balance privacy, utility, and fairness in Federated Learning are provided. The method comprises selecting, by a central server, for a first training round, a plurality of available computing devices to train a ML model using a FL strategy; establishing, by each device, a target disparity value the ML model should fulfill at the end of the training; training, by each device, the ML model by: selecting, from a dataset, a batch of training data for training the ML model; computing a first loss; computing a second loss; computing a global loss function by summing the first and second loss and balancing them with a $\lambda$ parameter, the latter being dynamically updated; sharing, by each device, the trained ML model with the central server, which further aggregates them; and repeating the method for a next training round until achieving a predefined number of training rounds.

**FIG. 1**

EP 4 730 208 A1

**Description**

**TECHNICAL FIELD**

The present invention relates to machine learning training and deploying methods. Particularly, the invention relates to a method, system and computer program to balance privacy, utility and fairness in federated learning.

**BACKGROUND OF THE INVENTION**

In recent years, Machine Learning (ML) models have been deployed in a wide variety of fields. In earlier years, the emphasis was primarily on optimizing the utility of these models. Nowadays, the current and upcoming AI legislation such as EU AI Act demand equal attention to other trustworthiness requirements including but not limited to fairness and privacy.

Fairness refers to the goal of reducing the algorithmic biases that models might exhibit in their predictions and/or representations. Privacy, on the other hand, refers to the goal of keeping training data safe and preventing any additional leakage of information through the use of the model.

Although privacy and fairness are ideally sought at the same time, it is unfortunately challenging to find a balance between them. In many cases, the outcome is a model exhibiting strong utility but deficient in terms of privacy protection and fairness.

Conversely, efforts to address the model's unfairness may compromise privacy protection and utility requirements.

This problem becomes even more complex to solve when we consider a Federated Learning (FL) scenario. With FL, various clients aim to train a model without transferring their local training data to a central server. Instead, they only exchange the locally trained model with a central aggregator. The decentralization of the training datasets introduces several issues that do not need to be considered when applying these techniques in a centralized learning context.

However, FL is gaining positions as one of the most promising paradigms for building the AI apps of the future. This is because of its inherent characteristics, such as its scalability and privacy-by-design as well as its capacity for exploiting hierarchical architectures as the ones present in telecommunications networks.

To make FL settings deployable in real-life scenarios having the need of coping with current and upcoming legislative frameworks, requires first to address the technical aspects related (but not limited) to fairness and privacy.

Training models that achieve both fairness and privacy objectives is always a challenging task [1]. Several scientific articles have demonstrated how using privacy mitigation techniques could lead to more unfairness models with respect to the underrepresented groups [2,3,4]. Likewise, using fairness mitigation techniques can increase the privacy risk of the clients involved in the training [5].

Present invention aims at mitigating Group Fairness, i.e., achieving consistent model performance across different demographic groups represented in the dataset. Current literature on FL often addresses privacy and fairness as separate constraints, rather than considering them jointly [9,10,11,12].

Recently, some works have started to consider the interplay between these two requirements. Borja Rodríguez-Gálvez et al. [13] introduced the Fair and Private Federated Learning (FPFL) algorithm to enforce group fairness in FL. The algorithm extends the modified method of differential multipliers to empirical risk minimization with fairness constraints and uses Differential Privacy (DP) to guarantee privacy protection. However, an important limitation of this algorithm is that each client can only perform a single local step before sharing the model with the server. This limitation increases the amount of communication with the server and slows down the training process. The present invention relies on a more advanced FL aggregation algorithm, allowing clients to perform multiple local steps before sending the trained model to the server.

A two-step approach to tackle this problem has been proposed in [14]. A fair model is initially trained by the clients using the Lagrangian Multiplier method to attain both fairness and utility. Then, a second model is trained with DP guarantees, aiming to align its predictions with the fair predictions of the first one. The second model is the one that is then shared with the server. However, the fact that the paper focuses exclusively on a scenario with very few clients involved leads to overlooking the potential problems that can arise when multiple clients are involved in training. Instead, the present invention works even if the number of clients involved increases, and addresses problems that may occur.

A different family of solutions to mitigate the model unfairness consists of making the model fair either in a pre- or a post-processing phase. Sikha Pentyala et al. [16] introduced a pre-processing and a post-processing algorithm to reduce the unfairness in FL. Their goal is not only to reduce the unfairness of the trained models but also to preserve their privacy. To this end, they adopted DP during the training of the model.

State of the art solutions do not include at least one of the following characteristics that are available in the method presented in this document:

　　1. A maximum target disparity that allows the user to specify an acceptable value greater than zero.

2. DP to ensure the privacy of individual clients.

3. The goal of maximizing the predictive accuracy under the constraints introduced above.

4. Corner cases (non-existence of probabilities, non-existence of local DP)

In general, existing solutions have limitations that have been addressed by the present invention. For example, in the approach proposed in [13], each client involved in the Federation can only perform a single local step before sharing the model with the server, which increases the amount of communication with the server and slows down the training process. The present invention relies on a more advanced FL aggregation algorithm, allowing clients to perform multiple local steps before sending the trained model to the server. Additionally, there is no mechanism for setting a fairness requirement, making it impossible to known in advance how fair the final model will be. They neither consider the balance between privacy, fairness, and utility, a trade-off that is crucial for trustworthy model training, which the present method addresses.

Likewise, the approach proposed in [14] was only tested in scenarios with very few clients involved. This leads to overlooking the potential problems that can arise when multiple clients are involved in training. Instead, the present invention works even if the number of clients involved increases, regardless of the data distribution they may have. Like [13], this approach neither allow fairness settings, leaving the final fairness of the model unknown, and lacks the analysis of the different trustworthiness requirements (privacy, fairness, and utility).

The approach proposed in [16] also falls short in the provision of a way to evaluate or balance privacy, fairness, and utility and does not allows to set a fairness requirement.

New and improved solutions to balance privacy, utility, and fairness in FL are therefore needed.

## DESCRIPTION OF THE INVENTION

Training and deploying ML models that simultaneously adhere to principles of fairness and privacy while ensuring good predictive performance (also known as utility) poses a significant challenge. The interplay between these three factors of trustworthiness is frequently underestimated and remains insufficiently explored. Consequently, many efforts focus on ensuring only two of these factors, neglecting one in the process.

The decentralization of the datasets and the variations in distributions among the clients exacerbate the complexity of achieving this ethical trade-off in the context of FL.

To that end, the object of present invention is to provide a technique that addresses these three factors of trustworthiness.

According to one aspect, the present invention proposes a method to balance privacy, utility, and fairness in FL. The method comprises: selecting, by a central server, for a first training round, a plurality of available computing devices (e.g. mobile phones, computers, laptops, tables, among others) to train a ML model using a FL strategy; establishing, by each computing device of the selected plurality of available computing devices, a target disparity value the ML model should fulfill at the end of the training; locally training, by each computing device, the ML model by performing the following steps: selecting, from a dataset, a batch of training data for training the ML model; computing a first loss on the selected batch of training data, the first loss being related to an accuracy of the ML model; computing a second loss on the selected batch of training data, the second loss being related to a fairness of the ML model; computing a global loss function by summing the first loss and the second loss and balancing them with a $\lambda$ parameter, the latter providing insight into the trade-off between accuracy and fairness of the ML model, the $\lambda$ parameter being dynamically updated by means of: computing a current unfairness parameter of the ML model using the second loss; applying a DP parameter to the computed current unfairness parameter, the DP parameter comprising noise sampled from a given Gaussian Distribution or from Laplace noise; computing a distance between the current computed unfairness parameter and the established target disparity value; and computing a new $\lambda$ parameter based on the $\lambda$ parameter and the computed distance; adding a DP parameter to the computed global loss function; updating the ML model based on the previous computing's; and if additional batches of training data are available in the dataset, iterating the previous steps until finishing all the batches, or otherwise, concluding the first training round; sharing, by each computing device, the locally trained ML model with the central server; aggregating, by the central server, all the shared locally trained ML models; and repeating the method for a next training round until achieving a predefined number of training rounds.

In some embodiments, in the computing of the new $\lambda$ parameter, the computed distance is multiplied by a velocity parameter, such that the update of the $\lambda$ parameter is smoothed.

In some embodiments, the DP parameter is computed using the DP-SGF algorithm. Particularly, this comprises computing a gradient of each training sample in the batch of training data, clipping the gradients, and adding noise to the clipped gradients.

In some embodiments, the method further comprises computing, by each computing device, different training statistics which include a number of model predictions with the probability of each demographic group achieving the learning target variable; sharing the computed statistics with the central server; and computing, by the central server, probabilities of the target being achieved by aggregating the computed statistics.

In some embodiments, the server further shares the computed probabilities with the plurality of computing devices that are selected for the next training round.

In some embodiments, before sharing the computed statistics, each computing device further applies a DP parameter to the computed training statistics, the DP parameter comprising noise sampled from a given Gaussian Distribution or from Laplace noise.

According to the invention, the dataset can comprise tabular data, text, images, and/or videos.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system/device causes the processor to perform the operations indicated herein as embodiments of the invention.

Consequently, present invention provides a new technique that solves the interplay between privacy, fairness, and utility within the context of FL, enabling informed decisions on the ethical trade-offs with the goal of training models striking a balance between these three dimensions.

The present invention allows for setting a user-specified fairness target for the trained model while guaranteeing the chosen training data privacy-protection level in FL. The proposed approach is also able to dynamically adjust the balance between fairness and utility during model training to prevent either overshooting the fairness target or reducing model utility more than necessary to reach the fairness target.

The invention have been tested across diverse datasets, models, and data distributions, reducing the model unfairness by up to 75%, with a maximum reduction in the utility of 24% in the worst-case scenario, while maintaining strict privacy guarantees during the FL training.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 schematically illustrates an embodiment of the proposed method.

Fig. 2 illustrates how the $\lambda$ parameter is updated, according to an embodiment.

Fig. 3 illustrates the protocol for sharing the statistics from clients to server, according to an embodiment.

Fig. 4 illustrates the use of the statistics received from the server on the different clients, according to an embodiment.

Fig. 5 illustrates a summary of how DP is used, according to an embodiment.

Fig. 6 illustrates the results of some experiments carried out with the Celeba Dataset, according to an embodiment.

## DETAILED DESCRIPTION OF THE INVENTION AND OF PREFERRED EMBODIMENTS

Present invention proposes a technique to train fair and private FL. The methodology allows setting a requirement for privacy and a desired target value for model fairness so that the clients who apply it can know how the ML model will behave at the end of the training.

In the following, some basic definitions to be considered are provided:

FL [18]: is a technique for training ML models while adhering to the data minimization principle, i.e., only sharing what is required for learning. In FL, K clients train a global model $\theta$ for a total number of R rounds without sharing the local datasets $D_k$ of size $n_k$ with a central server. The orchestration of the model training is managed by a server S that selects a subset of clients for each round $r \in [0, R]$.

DP: is a formal definition of privacy introduced in [16][17]. Given $\varepsilon > 0$ and $\delta \in [0,1]$, a randomized algorithm $M: X \rightarrow O$ is $(\varepsilon, \delta)$ - DP, if for any neighbouring $x,x' \in X$, $S \subset O$,

$$P[M(x) \in S] \leq e^{\varepsilon}P[M(x') \in S] + \delta.$$

Privacy Preserving ML: DP can be applied during the training of a ML model by using the DP-SGD [7] algorithm, a modification of the SGD algorithm. DP-SGD differs from SGD in the way gradients are calculated: given a random sample of training data $L_e$, it computes the gradient of each $i \in L_e$. These gradients are clipped and then some noise is added to guarantee privacy protection.

Fairness in ML: The problem of training fair ML models has received growing attention in the past few years. In the literature, several definitions of fairness can be found and different fairness measures that can be used to evaluate the unfairness of a trained ML model exist.

The present invention focuses on Group Fairness in the FL setting. In this context, the goal is to train a ML model to be fair with all the different demographic groups represented in the dataset. These groups may be defined based on sensitive attributes such as gender or race. There exist several fairness metrics that can be used to measure how fair a model is. Among the growing number of fairness metrics available in the state of the art, Demographic Parity [8] is used. However, this is not limitative as the invention can be easily extended to support other group fairness metrics in addition to Demographic Parity.

Demographic Parity is a notion of independence that requires the probability of a certain prediction to be independent of the sensitive group membership. More formally, the Demographic Parity is defined as:

$$P\left(\hat{Y} = y \mid Z = z\right) = P\left(\hat{Y} = y \mid Z \neq z\right)$$

In other words, the ML model should produce similar success rates for all the distinct groups. The more similar the two probabilities are, the fairer the ML model will be.

Despite FL being designed to reduce and mitigate the privacy risk of the clients involved in the training, it exhibits susceptibility to certain vulnerabilities, notably Membership Inference Attacks, as demonstrated in several studies. Therefore, the integration of privacy-preserving techniques is mandatory to align with the goal of training ML models with privacy guarantees.

An additional critical trustworthiness requirement that the present invention aims to guarantee is the fairness of the trained ML model. It is well known that ML models often inherit the biases of the training dataset. This poses a challenge, especially in contexts where any manifestation of discrimination is unacceptable. Thus, present invention proactively addresses this concern by using a mechanism aimed at increasing fairness throughout the training process.

The present invention aims to find a trade-off between the privacy, fairness and utility of the training ML model ensuring a trustworthy and accurate model.

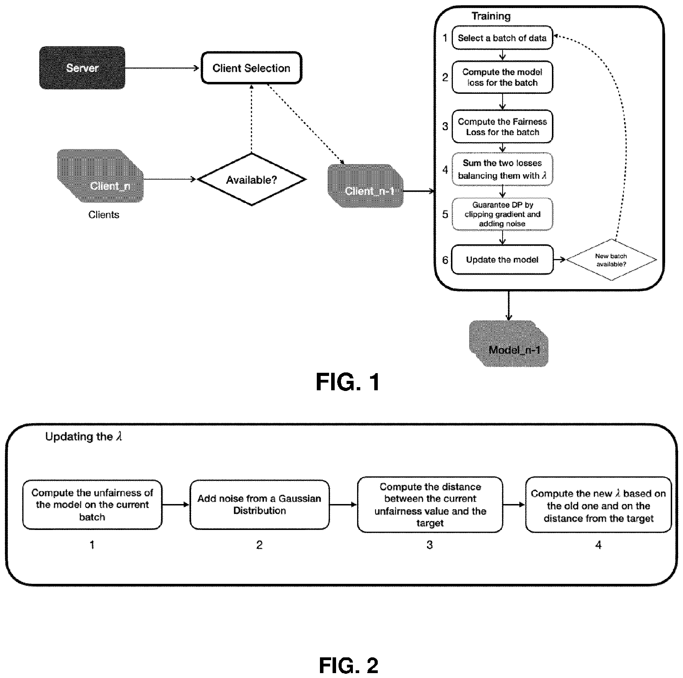

With regard to Fig. 1, an embodiment of the proposed method is shown. The reduction of model unfairness is achieved through the incorporation of a regularization term computed by each client (i.e. each computing device) within every training batch. This regularization term is then added to the conventional model loss. It depends upon both the current unfairness level of the ML model and the target disparity value, denoted as 'T'. To ensure privacy, present invention approach adopts DP, particularly employing the DP-SGD algorithm [7], which guarantees privacy for training ML models.

Specifically, the present invention focuses on the Training box, which involves introducing specific modifications to the conventional FL training procedure to achieve fairness and privacy. To begin the FL process, the server selects clients (i.e. computing devices) based on their availability. For example, if mobile phones are used as clients, they may be chosen only if they are connected to Wi-Fi and charging. This ensures efficient resource usage during the model training. After this initial step of clients' selection, the real training process is initiated, in which the proposed methodology to train a fair and private ML model is used. In this embodiment, the training steps are the following:

Step 1: Selection of a batch of data for training.

Step 2: Computation of the ML model's output and the corresponding loss, denoted as first loss L1, on the selected data batch.

Step 3: Computation of the model's fairness loss, denoted as second loss L2, on the same data batch. This fairness loss serves as a regularization term to reduce the ML model's unfairness.

Step 4: This is the point in which the fairness mitigation is applied; to do so the method needs to aggregate the two losses by summation using a parameter called $\lambda$ to balance between the importance of the loss of the ML model and the regularization:

■

$$loss = (1 - \lambda) * L1 + \lambda * L2$$

Step 5: To ensure that the methodology is private a DP parameter is added to the global loss function previously computed. Particularly, this implies the calculation of the gradient, the clipping of the gradient, and the addition of noise to the clipped gradient.

Step 6: The ML model is updated.

Step 7: If additional data is available for further training, the client iterates the process from Training 1 (i.e. the client actively checks whether additional batches of training data are available in the dataset). Otherwise, the client concludes the FL round and shares the (locally) resultant ML model with the server.

In order to train a fair model, a key parameter of the present invention is the use of the 'T' parameter, that represents the target unfairness value the ML model should exhibit upon the conclusion of the training process. This feature has a particular significance when compliance with regulations necessitates deploying ML models adhering to predefined maximum unfairness value. The target unfairness 'T' is linked to the $\lambda$ parameter used during the training. Particularly, $\lambda$ has the role of balancing the ML model loss against the regularization term. Essentially, it provides insight into the trade-off between model accuracy and fairness.

As the target unfairness 'T' is reduced, there arises a need to increase the parameter $\lambda$ to ensure the ML model can meet this requirement effectively.

With the proposed method, the concept of "Tunable" $\lambda$ is introduced. This entails the ability to dynamically adjust the value of $\lambda$ during the ML model training based on both the current level of model unfairness and the specified target unfairness 'T'. By introducing this $\lambda$, the methodology enhances the ML model's capacity to achieve and maintain desired fairness standards, even in the face of evolving data distributions and regulatory requirements.

Fig. 2 shows an embodiment of how $\lambda$ is updated during the training to hit the target unfairness requirement. Specifically, in this embodiment, the following steps are carried out:

Step 1: During the training of the ML model, the unfairness parameter 'U' of the current model on the current batch of data is computed.

Step 2: To ensure DP, noise sampled from a Gaussian Distribution is added.

Step 3: The distance $\Delta$ between the unfairness value 'U' and the target unfairness 'T' is computed.

Step 4: The value of $\lambda_{t+1}$ is computed based on the $\delta$ and based on the current value $\lambda_t$. More specifically the following formula is executed:

$$\Delta = T - U.$$

Additionally, in some embodiments, to smooth the update of $\lambda$, the distance $\Delta$ can be multiplied by a velocity parameter, according to the following equation:

$$velocity = momentum * velocity + \Delta$$

$$\lambda_{t+1} = \lambda_t - \alpha * velocity,$$

where momentum represents a hyperparameter commonly used during neural network training. Similarly, $\alpha$ denotes another hyperparameter indicating how fast the method aims to reach the target disparity. Particularly, velocity is a parameter initialized with a value of 0.

The proposed methodology is versatile and can be adopted regardless of the distribution of the training dataset, the ML model architecture, or the type of training data utilized.

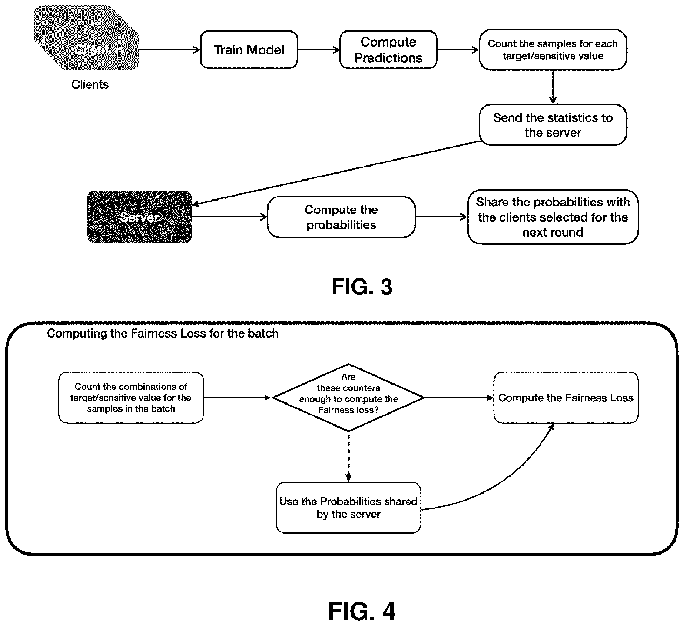

The distribution of the training dataset is a crucial aspect that needs to be considered when working with FL. In real-world scenarios, clients participating in the training process may possess datasets with different distributions. In some cases, the clients may exclusively have samples with only one of the possible sensitive values (i.e. demographic groups), such as having data solely for men or women. In such cases, these clients cannot directly compute the regularization term because they only have a view on a part of the dataset. To handle this case, the present invention, in some embodiments, proposes a solution that involves the sharing of some statistics from the client to the server to be able to compute the regularization term. This is illustrated in Fig. 3.

In detail, after each FL round, the clients that execute the method compute the number of model predictions for each combination of target-sensitive attributes. Then, the clients share with the server the minimum amount of information that can allow the server to retrieve all the other required statistics. In a particular embodiment, a classification problem with a binary label and binary sensitive feature is assumed at the end of each training round. In this particular case, each client computes the following statistics and shares them with the server: the number of samples with demographic groups equal to 1 and target (i.e. the learning objective variable) 1 and the number of samples with a demographic groups equal to 0 and target 1.

Usually, the shared information is sufficient for the server to compute all the other missing statistics and the probabilities of having each target given each possible sensitive value (i.e. each demographic group). The clients do not need to compute and share the number of samples with sensitive values 1 and with sensitive value 0 for each FL round, because these values do not change during the training; thus, sharing them just at the beginning of the training process is sufficient. After computing the missing statistics, the server can share these values with the clients selected for the next FL round.

To clarify, and without loss of generality, assuming a dataset with a binary label Y and sensitive value Z, each selected client will receive four different probabilities:

$$P(Y=1 \mid Z = 1), P(Y=1 \mid Z = 0), P(Y=0 \mid Z = 1), P(Y=0 \mid Z = 0).$$

Generalizing the values shown above, given:

$$\Gamma(y, z) = \mathbb{P}(\hat{Y} = y \mid Z = z) - \mathbb{P}(\hat{Y} = y \mid Z \neq z)$$

DPL is calculated as:

$$DPL(\theta; D) = max_y max_z \Gamma(y, z)$$

.

If the selected clients lack the necessary data to calculate the DPL formula, they can rely on the statistics shared by the server. Fig. 4 shows how the clients count the different predictions for each batch during the ML model training and how they use the statistics when needed (what occurs in case the selected clients lack the necessary data to calculate the DPL, then they use the statistics shared by the server to replace any missing group in the DPL formula).

This imputation of missing values for the DPL calculation is done every round when is required after the 1st learning round (including it). At the very initial round (round 0) the clients for which the DPL cannot be calculated use $\lambda = 0$ and this value gets updated from the next round onwards.

In addition to allowing the method to work with any data distribution, client-shared statistics play a crucial role in obtaining an understanding of the trained model's disparity. A global view of the ML model fairness involves aggregating the various counters from individual clients, allowing for the computation of demographic disparity as if the server had access to the entire dataset. Conversely, the opposite approach involves gaining a local understanding of demographic disparity by computing the mean of each client's demographic disparity. This dual approach enables a global view across the entire dataset and a focused examination of individual clients' unfairness.

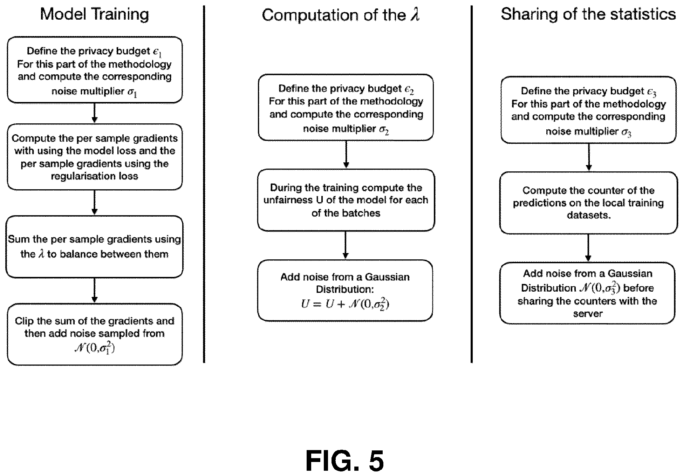

As explained, the proposed method adopts DP to guarantee the privacy of the trained ML model. Fig. 5 summarises how DP can be used during the different training phases of the ML model. For each phase, the well-known Gaussian mechanism [16] to provide privacy can be used. Additionally, to track the total privacy budget for each phase, the RDP accountant implemented in Opacus [19] can be used.

Particularly, the different phases in which DP can be applied include:

- Model Training: during the training of the ML model, the DP-SGD algorithm [7] can be employed to ensure that the ML model is differentially private. This is denoted as the privacy budget for this phase $(\varepsilon_1, \delta_1)$ and the corresponding noise needed to guarantee DP as $\sigma_1$.

The privacy of model training follows immediately since the DP-SGD is used with minor variations; the minibatch is selected via Poisson sampling with a given sampling ratio, and the method still clips the per-example gradients using the clipping value B and adds noise distributed as $\mathcal{N}(0, B^2\sigma_1^2)$ to each dimension. Therefore, the total number of local optimization steps gives the client-specific number of compositions for privacy accounting.

- Computation of the Lambda: Updating the $\lambda$ parameter during the training of each client involves utilizing information dependent on the training datasets. This means that adjusting $\lambda$ during training could potentially lead to information leakage. Therefore, DP is applied to the $\lambda$ update process. As shown in Fig. 2, after computing the ML model's unfairness on the current training data batch, noise sampled from a Gaussian Distribution $\mathcal{N}(0, \sigma_2^2)$ is applied,

where $\sigma_2$ depends on the privacy budget $\varepsilon_2$ that was allocated for this part of the methodology. Given that the unfairness value is bounded between 0 and 1, clipping is unnecessary to preserve DP. The resulting noisy value is clipped to [0,1] which does not affect DP due to the post-processing guarantees of DP [20]. The number of compositions for the computation of the $\lambda$ matches the total number of local optimisation steps.

- Sharing of the statistics: when the clients share their statistics with the server they disclose some sensitive information about their training dataset. Thus, DP also needs to be applied in this part. Before sending the statistics to the server, the clients sum them to noise sampled from a Gaussian Distribution $\mathcal{N}(0, \sigma_3^2)$ where $\sigma_3$ depends on the privacy budget $\varepsilon_3$. As with the $\lambda$, the sensitivity can be bounded without clipping. The statistics are essentially counts; this means that the sensitivity under add/remove neighbourhood is equal to 1. The number of compositions for sharing the statistics is the total number of FL rounds where a given client is selected.

By integrating DP into at least some of these three phases, the method avoids information leakage and ensures that the methodology is private. This enhances user trust and compliance with regulatory requirements about data privacy.

From the basic composition theorem of DP it follows that the entire protocol achieves $(\varepsilon, \delta)$ - DP, where: $\varepsilon = \varepsilon_1 + \varepsilon_2 + \varepsilon_3$ and $\delta = \delta_1 + \delta_2 + \delta_3$.

The proposed method has been tested on multiple datasets, proving that it can be effective regardless of the data modality (tabular data, text, image...), distribution, and model architecture. Specifically, different experiments have been conducted using the following datasets:

- CelebA is an image dataset with more than 200.000 celebrity images with annotations. The annotations are crucial in the proposed scenario since they contain information about the gender of the person depicted in the photos. Since there are only a few annotated image datasets with this number of images, it was decided to use it artificially dividing it among the FL clients. In this experiment, the focus was put on a classification task, predicting whether the celebrity in the image is smiling or not.
- Dutch is a tabular dataset collected in the Netherlands, providing information about individuals. The objective here is to predict whether the participants' salary is above or below $50,000.
- ACS Income is a tabular dataset built from the American Community Survey (ACS) with data coming from 50 states and Puerto Rico in 2018.

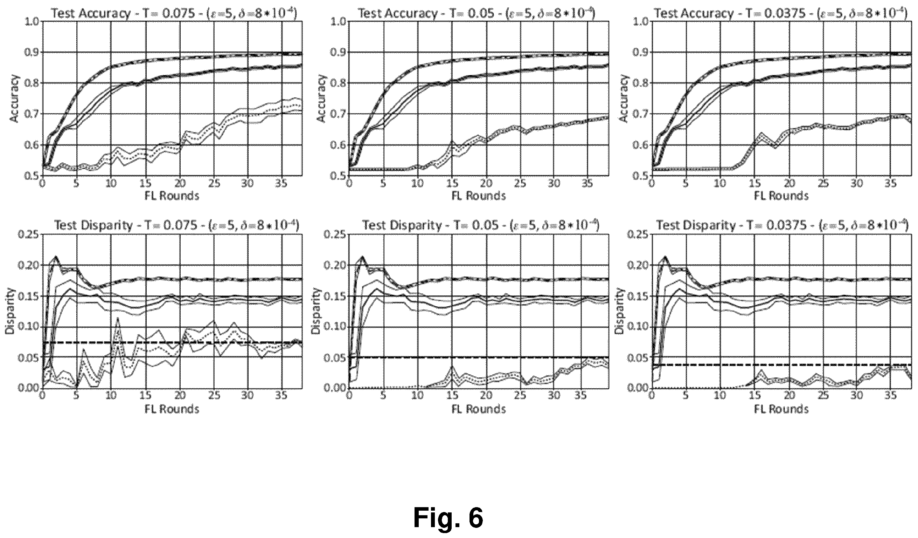

Fig. 6 shows a number set of results obtained with one of the considered datasets.

To explore the interaction between these trustworthiness requirements, several combinations of target $(\varepsilon, \delta)$ for privacy and disparity T for fairness were examined. Two potential privacy targets $\varepsilon$ and three different target disparities T were considered. Given that in deep learning a common practice is using $\varepsilon \leq 10$, the method selected as target $(\varepsilon = 5, \delta = 8 * 10^{-4})$ and $(\varepsilon = 8, \delta = 8 * 10^{-4})$ in the experiment with CelebA. The parameter $\delta$ is determined by considering the local parameter $\delta_k = \frac{1}{n_k}$ computed by each client using the local dataset size, as recommended in the literature. In the proposed method, $\delta$ is computed as the maximum $\delta_k$ among all clients, denoted as $\max_k \delta_k$.

For the fairness preferences, the target disparity 'T' was established based on the percentage reduction from the baseline. The method was tested with a 50% reduction, a 65% reduction and a 75% reduction in disparity, to prove their efficacy in achieving a trade-off, even when the target disparity is extremely low. Since the baseline model trained with FL on the CelebA dataset has a disparity of $\sim 0.15$, the method set the target disparities for the experiment at 0.075, 0.05, and 0.0375.

It is important to notice that the parameter 'T' is only a desired value for the disparity of the clients. While the experiments generally demonstrate that the model disparity computed by the server often aligns with this target value, it is not a certainty for both the test set and the training set.

The results reported here are the average and standard error of 5 executions of each experiment. In each execution, a different seed for shuffling the training clients was used, while the clients in the test set remained the same in each experiment.

Fig. 6 provides a valuable insight into the intricate trade-off between fairness, utility, and privacy when the privacy requirement is $(\varepsilon = 5, \delta = 8 * 10^{-4})$. In the first row, the test accuracy achieved by varying the target disparity is presented. In the second row, the corresponding achieved test disparity is presented. In these plots, different, escalating configurations are shown: 1) Baseline model without fairness or DP; 2) Model with DP; 3) The proposed method. The horizontal line in the test disparity plots represents the target disparity fixed in each of the experiments. The Test Disparity is computed by the server using the statistics shared by the test clients. This computation represents a global view of the disparity of the aggregated model. Looking at the three accuracy plots, it can be noticed that as the target fairness disparity 'T' is decreased, there is a corresponding reduction in the accuracy of the trained model. With a target disparity T=0.075, when comparing the methodology against the Baseline, a reduction in the disparity of the model by at least 50% is achieved.

In terms of utility, using the proposed method a degradation of 18% compared with the baseline is obtained. Comparing the proposed method with the DP baseline, the reduction in accuracy is only 14%.

Decreasing the 'T' and fixing T=0.0375 leads to a more evident utility degradation. In this case, comparing the method with the Baseline, the accuracy drops by 20%. However, the disparity of the model is reduced by 75%. This degradation occurs because the decrease in 'T' leads to an increase in the value of $\lambda$ used in the computation of the gradient. Increasing the $\lambda$ implies assigning more weight to the fairness regularization term than to the traditional model loss. Consequently, the model utility experiences a degradation. This underlines the unavoidable trade-off among the three trustworthiness factors under consideration.

The present invention offers a highly adaptable and versatile framework for optimizing privacy-preserving FL systems, with a focus on Differential Privacy Stochastic Gradient Descent (DP-SGD). However, the invention extends well beyond DP-SGD and federated averaging, making it suitable for a variety of optimization and aggregation methods. The framework can be customized and expanded for different FL scenarios and fairness metrics, data types, and noise models, as described below:

- Alternative Settings: Cross-Device vs. Cross-Silo: Although the invention has been evaluated in Cross-Device FL scenarios, it is designed to be flexible enough to work in Cross-Silo FL scenarios as well. In Cross-Silo settings, a smaller number of clients, typically institutions or companies, participate in FL, each contributing larger datasets than individual devices in a Cross-Device setting. This adaptability makes the framework suitable for a broader range of applications, regardless of the number of clients or the volume of data.

- Extensible to Other and Novel Fairness Metrics: The methodology has been tested with the Demographic Disparity fairness metric, but it can be extended to any fairness metric measured in the [0,1] range. For example, Equalized Odds and Equal Opportunity metrics, which focus on equalizing predictive error rates among demographic groups, can be integrated into the framework. These metrics introduce different fairness perspectives, offering deeper insights into bias and fairness in model outcomes.

- Extensible to Other Datasets and Modalities: While the current implementation has been validated on tabular and image datasets, the framework is versatile enough to handle other data modalities, such as text-based datasets.

- Other Types of Noise for DP: The invention primarily relies on Gaussian noise due to its well-known properties, but alternative noise models, such as Laplace noise, can be utilized. Laplace noise, with its heavy tails, may be more effective in scenarios requiring strict privacy guarantees. By experimenting with different types of noise, the framework offers enhanced control over the privacy-utility trade-off, allowing practitioners to tailor their DP mechanisms to suit their specific needs.

- Diverse Data Distributions: The system has been tested in both IID (independent and identically distributed) and non-IID settings, making it robust across various data distribution scenarios. In real-world FL applications, data is often non-IID, meaning that client data can vary significantly across devices. The methodology remains effective under such conditions, ensuring fairness and efficiency even in environments with uneven data distributions.

- Heterogeneous Scenarios: The invention can handle a wide range of heterogeneous environments, originally designed for mobile and IoT devices but adaptable to more complex scenarios such as Trusted Execution Environments (TEEs).

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

References

[1] Cummings, R., Gupta, V., Kimpara, D., & Morgenstern, J. (2019, June). On the compatibility of privacy and fairness. In Adjunct publication of the 27th conference on user modeling, adaptation and personalization (pp. 309-315).

[2] Bagdasaryan, E., Poursaeed, O., & Shmatikov, V. (2019). Differential privacy has disparate impact on model accuracy. Advances in neural information processing systems, 32.

[3] Pujol, D., McKenna, R., Kuppam, S., Hay, M., Machanavajjhala, A., & Miklau, G. (2020, January). Fair decision making using privacy-protected data. In Proceedings of the 2020 Conference on Fairness, Accountability, and Transparency (pp. 189-199).

[4] Esipova, M. S., Ghomi, A. A., Luo, Y., & Cresswell, J. C. (2022). Disparate impact in differential privacy from gradient misalignment. arXiv preprint arXiv:2206.07737.

[5] Chang, H., & Shokri, R. (2021, September). On the privacy risks of algorithmic fairness. In 2021 IEEE European Symposium on Security and Privacy (EuroS&P) (pp. 292-303). IEEE.

[6] Kamishima, T., Akaho, S., & Sakuma, J. (2011, December). Fairness-aware learning through regularization approach. In 2011 IEEE 11th International Conference on Data Mining Workshops (pp. 643-650). IEEE.

[7] Abadi, M., Chu, A., Goodfellow, I., McMahan, H. B., Mironov, I., Talwar, K., & Zhang, L. (2016, October). Deep learning with differential privacy. In Proceedings of the 2016 ACM SIGSAC conference on computer and communications security (pp. 308-318).

[8] Dwork, C., Hardt, M., Pitassi, T., Reingold, O., & Zemel, R. (2012, January). Fairness through awareness. In Proceedings of the 3rd innovations in theoretical computer science conference (pp. 214-226).

[9] Zhang, D. Y., Kou, Z., & Wang, D. (2020, December). Fairfl: A fair federated learning approach to reducing demographic bias in privacy-sensitive classification models. In 2020 IEEE International Conference on Big Data (Big Data) (pp. 1051-1060). IEEE.

[10] Ezzeldin, Y. H., Yan, S., He, C., Ferrara, E., & Avestimehr, A. S. (2023, June). Fairfed: Enabling group fairness in federated learning. In Proceedings of the AAAI Conference on Artificial Intelligence (Vol. 37, No. 6, pp. 7494-7502).

[11] Cui, S., Pan, W., Liang, J., Zhang, C., & Wang, F. (2021). Addressing algorithmic disparity and performance inconsistency in federated learning. Advances in Neural Information Processing Systems, 34, 26091-26102.

[12] Abay, A., Zhou, Y., Baracaldo, N., Rajamoni, S., Chuba, E., & Ludwig, H. (2020). Mitigating bias in federated learning. arXiv preprint arXiv:2012.02447.

[13] Gálvez, B. R., Granqvist, F., van Dalen, R., & Seigel, M. (2021, November). Enforcing fairness in private federated learning via the modified method of differential multipliers. In NeurIPS 2021 Workshop Privacy in Machine Learning.

[14] Padala, M., Damle, S., & Gujar, S. (2021). Federated learning meets fairness and differential privacy. In Neural Information Processing: 28th International Conference, ICONIP 2021, Sanur, Bali, Indonesia, December 8-12, 2021, Proceedings, Part VI 28 (pp. 692-699). Springer International Publishing.

[15] Pentyala, S., Neophytou, N., Nascimento, A., De Cock, M., & Farnadi, G. (2022). Privfairfl: Privacy-preserving group fairness in federated learning. arXiv preprint arXiv:2205.11584.

[16] Dwork, Cynthia and McSherry, Frank and Nissim, Kobbi and Smith, Adam (2006) Calibrating Noise to Sensitivity in Private Data Analysis.

[17] Dwork, Cynthia and Kenthapadi, Krishnaram and McSherry, Frank and Mironov, Ilya and Naor, Moni (2006) - Our Data, Ourselves: Privacy Via Distributed Noise Generation.

[18] H. Brendan McMahan and Eider Moore and Daniel Ramage and Seth Hampson and Blaise Agüera y Areas (2016) Communication-Efficient Learning of Deep Networks from Decentralized Data.

[19] Ashkan Yousefpour and Igor Shilov and Alexandre Sablayrolles and Davide Testuggine and Karthik Prasad and Mani Malek and John Nguyen and Sayan Ghosh and Akash Bharadwaj and Jessica Zhao and Graham Cormode and Ilya Mironov (2022) - Opacus: User-Friendly Differential Privacy Library in PyTorch.

[20] Dwork, Cynthia and Roth, Aaron (2014) - The Algorithmic Foundations of Differential Privacy.

**Claims**

**1.** A method to balance privacy, utility, and fairness in Federated Learning, the method comprising:

selecting, by a central server, for a first training round, a plurality of available computing devices to train a machine learning, ML, model using a Federated Learning, FL, strategy;

establishing, by each computing device of the selected plurality of available computing devices, a target disparity value the ML model should fulfill at the end of the training;

training, by each computing device, the ML model by performing the following steps:

selecting, from a dataset, a batch of training data for training the ML model;

computing a first loss on the selected batch of training data, the first loss being related to an accuracy of the ML model;

computing a second loss on the selected batch of training data, the second loss being related to a fairness of the ML model;

computing a global loss function by summing the first loss and the second loss and balancing them with a $\lambda$ parameter, the latter providing insight into the trade-off between accuracy and fairness of the ML model, the $\lambda$ parameter being dynamically updated by means of:

computing a current unfairness parameter of the ML model using the second loss;

applying a differential privacy, DP, parameter, to the computed current unfairness parameter, the DP parameter comprising noise sampled from a given Gaussian Distribution or from Laplace noise;

computing a distance between the current computed unfairness parameter and the established target disparity value; and

computing a new $\lambda$ parameter based on the $\lambda$ parameter and the computed distance;

adding a DP parameter to the computed global loss function;

updating the ML model based on the previous computing's; and

if additional batches of training data are available in the dataset, iterating the previous steps until finishing all the batches, or otherwise, concluding the first training round;

sharing, by each computing device, the trained ML model with the central server;

aggregating, by the central server, all the shared trained ML models; and

repeating the method for a next training round until achieving a predefined number of training rounds.

2. The method of claim 1, wherein in the computing of the new $\lambda$ parameter the computed distance is multiplied by a velocity parameter, such that the update of the $\lambda$ parameter is smoothed.

3. The method of any one of the previous claims, wherein the DP parameter is computed using the DP-SGF algorithm.

4. The method of any one of the previous claims, wherein the DP parameter is computed by:

computing a gradient of each training sample in the batch of training data,

clipping the gradients, and

adding noise to the clipped gradients.

5. The method of any one of the previous claims, further comprising:

computing, by each computing device, different training statistics which include a number of model predictions with the probability of each demographic group achieving the learning target variable;

sharing the computed statistics with the central server; and

computing, by the central server, probabilities of the target being achieved by aggregating the computed statistics.

6. The method of claim 5, wherein the server further shares the computed probabilities with the plurality of computing devices that are selected for the next training round.

7. The method of claim 5 o 6, wherein before sharing the computed statistics, each computing device further applies a DP parameter to the computed training statistics, the DP parameter comprising noise sampled from a given Gaussian Distribution or from Laplace noise.

8. The method of any one of the previous claims, wherein the dataset comprises at least one of tabular data, text, images, or videos.

9. A system to balance privacy, utility, and fairness in Federated Learning, comprising:

a central server; and
computing devices;
the central server being configured to select, for a first training round, a plurality of available computing devices to train a machine learning, ML, model using a Federated Learning, FL, strategy;
each computing device of the selected plurality of available computing devices being configured to:

establish a target disparity value the ML model should fulfill at the end of the training;
train the ML model by performing the following steps:

select, from a dataset, a batch of training data for training the ML model;
compute a first loss on the selected batch of training data, the first loss being related to an accuracy of the ML model;
compute a second loss on the selected batch of training data, the second loss being related to a fairness of the ML model;
compute a global loss function by summing the first loss and the second loss and balancing them with a $\lambda$ parameter, the latter providing insight into the trade-off between accuracy and fairness of the ML model, the $\lambda$ parameter being dynamically updated by means of: computing a current unfairness parameter of the ML model using the second loss; applying a differential privacy, DP, parameter, to the computed current unfairness parameter, the DP parameter comprising noise sampled from a given Gaussian Distribution or from Laplace noise; computing a distance between the current computed unfairness parameter and the established target disparity value; and computing a new $\lambda$ parameter based on the $\lambda$ parameter and the computed distance;
add a DP parameter to the computed global loss function;
update the ML model based on the previous computing's;
if additional batches of training data are available in the dataset, iterate the previous steps until finishing all the batches, or otherwise, conclude the first training round;

share the trained ML model with the central server;

the central server, being further configured to aggregate all the shared trained ML models and further repeat the selection of available computing devices for a next training round until achieving a predefined number of training rounds.

10. The system of claim 9, wherein the computing devices comprises mobile phones, computers, laptops, tables, or combinations thereof.

11. The system of claim 9 or 10, wherein the dataset comprises at least one of tabular data, text, images, or videos.

12. A non-transitory computer readable medium including code instructions that when executed in a computer device implement a method to balance privacy, utility, and fairness in Federated Learning by:

establishing a target disparity value a machine learning, ML, model should fulfill at the end of a first training round of a training using a Federated Learning, FL, strategy;
training the ML model by:

selecting, from a dataset, a batch of training data for training the ML model;
computing a first loss on the selected batch of training data, the first loss being related to an accuracy of the ML model;
computing a second loss on the selected batch of training data, the second loss being related to a fairness of the ML model;
computing a global loss function by summing the first loss and the second loss and balancing them with a $\lambda$ parameter, the latter providing insight into the trade-off between accuracy and fairness of the ML model, the $\lambda$ parameter being dynamically updated by means of:

computing a current unfairness parameter of the ML model using the second loss;
applying a differential privacy, DP, parameter, to the computed current unfairness parameter, the DP parameter comprising noise sampled from a given Gaussian Distribution or from Laplace noise;
computing a distance between the current computed unfairness parameter and the established target disparity value; and
computing a new $\lambda$ parameter based on the $\lambda$ parameter and the computed distance;

adding a DP parameter to the computed global loss function;
updating the ML model based on the previous computing's;
if additional batches of training data are available in the dataset, iterating the previous steps until finishing all the batches, or otherwise, concluding the first training round; and

share the trained ML model with the central server.

**FIG. 1**

**FIG. 2**

Client_n → Train Model → Compute Predictions → Count the samples for each target/sensitive value

Clients

Send the statistics to the server

Server → Compute the probabilities → Share the probabilities with the clients selected for the next round

## FIG. 3

Computing the Fairness Loss for the batch

Count the combinations of target/sensitive value for the samples in the batch → Are these counters enough to compute the Fairness loss? → Compute the Fairness Loss

Use the Probabilities shared by the server

## FIG. 4

## Model Training

Define the privacy budget $\epsilon_1$
For this part of the methodology
and compute the corresponding
noise multiplier $\sigma_1$

↓

Compute the per sample gradients
with using the model loss and the
per sample gradients using the
regularisation loss

↓

Sum the per sample gradients using
the $\lambda$ to balance between them

↓

Clip the sum of the gradients and
then add noise sampled from
$\mathcal{N}(0,\sigma_1^2)$

## Computation of the $\lambda$

Define the privacy budget $\epsilon_2$
For this part of the methodology
and compute the corresponding
noise multiplier $\sigma_2$

↓

During the training compute the
unfairness U of the model for each
of the batches

↓

Add noise from a Gaussian
Distribution:
$U = U + \mathcal{N}(0,\sigma_2^2)$

## Sharing of the statistics

Define the privacy budget $\epsilon_3$
For this part of the methodology
and compute the corresponding
noise multiplier $\sigma_3$

↓

Compute the counter of the
predictions on the local training
datasets.

↓

Add noise from a Gaussian
Distribution $\mathcal{N}(0,\sigma_3^2)$ before
sharing the counters with the
server

# FIG. 5

Fig. 6

| | Europäisches Patentamt European Patent Office Office européen des brevets | **EUROPEAN SEARCH REPORT** | **Application Number** EP 24 38 3140 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUCA CORBUCCI ET AL: "PUFFLE: Balancing Privacy, Utility, and Fairness in Federated Learning", ARXIV.ORG, CORNELL UNIVERSITY LIBRARY, 201 OLIN LIBRARY CORNELL UNIVERSITY ITHACA, NY 14853, 21 July 2024 (2024-07-21), XP091828264, * page 1 - page 6 * * Algorithms 1 and 2 * | 1-12 | INV. G06N3/098 G06N3/084 G06N3/09 |
| A | XINPENG LING ET AL: "FedFDP: Fairness-Aware Federated Learning with Differential Privacy", ARXIV.ORG, CORNELL UNIVERSITY LIBRARY, 201 OLIN LIBRARY CORNELL UNIVERSITY ITHACA, NY 14853, 19 August 2024 (2024-08-19), XP091845540, * page 1 - page 5 * * Algorithm 1 * | 1-12 | |
| A | CAI HONGYUN ET AL: "PLFa-FL: Personalized Local Differential Privacy for Fair Federated Learning", 2024 27TH INTERNATIONAL CONFERENCE ON COMPUTER SUPPORTED COOPERATIVE WORK IN DESIGN (CSCWD), IEEE, 8 May 2024 (2024-05-08), pages 2325-2332, XP034635598, DOI: 10.1109/CSCWD61410.2024.10580666 [retrieved on 2024-07-10] * page 1 - page 5 * | 1-12 | TECHNICAL FIELDS SEARCHED (IPC) G06N |

-/--

The present search report has been drawn up for all claims

| Place of search | Date of completion of the search | Examiner |
|---|---|---|
| The Hague | 3 March 2025 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 38 3140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHOTSO SELIALIA ET AL: "Mitigating Group Bias in Federated Learning for Heterogeneous Devices", ARXIV.ORG, CORNELL UNIVERSITY LIBRARY, 201 OLIN LIBRARY CORNELL UNIVERSITY ITHACA, NY 14853, 11 July 2024 (2024-07-11), XP091816513, DOI: 10.1145/3630106.3658954 * page 1 - page 7 * ----- | 1-12 | |

TECHNICAL FIELDS
SEARCHED     (IPC)

The present search report has been drawn up for all claims

| Place of search | Date of completion of the search | Examiner |
|---|---|---|
| The Hague | 3 March 2025 | Keresztury, Bence |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................

& : member of the same patent family, corresponding
    document

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CUMMINGS, R.** ; **GUPTA, V.** ; **KIMPARA, D.** ; **MORGENSTERN, J.** On the compatibility of privacy and fairness. *Adjunct publication of the 27th conference on user modeling, adaptation and personalization*, June 2019, 309-315
- **BAGDASARYAN, E.** ; **POURSAEED, O.** ; **SHMATIKOV, V.** Differential privacy has disparate impact on model accuracy. *Advances in neural information processing systems*, 2019, vol. 32
- **PUJOL, D.** ; **MCKENNA, R** ; **KUPPAM, S.** ; **HAY, M.** ; **MACHANAVAJJHALA, A.** ; **MIKLAU, G.** Fair decision making using privacy-protected data. *Proceedings of the 2020 Conference on Fairness, Accountability, and Transparency*, January 2020, 189-199
- **ESIPOVA, M. S.** ; **GHOMI, A. A.** ; **LUO, Y.** ; **CRESSWELL, J. C.** Disparate impact in differential privacy from gradient misalignment. *arXiv preprint arXiv:2206.07737*, 2022
- On the privacy risks of algorithmic fairness. **CHANG, H.** ; **SHOKRI, R.** 2021 IEEE European Symposium on Security and Privacy (EuroS&P). IEEE., September 2021, 292-303
- Fairness-aware learning through regularization approach. **KAMISHIMA, T.** ; **AKAHO, S.** ; **SAKUMA, J.** 2011 IEEE 11th International Conference on Data Mining Workshops. IEEE., December 2011, 643-650
- **ABADI, M.** ; **CHU, A.** ; **GOODFELLOW, I.** ; **MCMAHAN, H. B.** ; **MIRONOV, I.** ; **TALWAR, K.** ; **ZHANG, L.** Deep learning with differential privacy. *Proceedings of the 2016 ACM SIGSAC conference on computer and communications security*, October 2016, 308-318
- **DWORK, C.** ; **HARDT, M.** ; **PITASSI, T.** ; **REINGOLD, O.** ; **ZEMEL, R.** Fairness through awareness. *Proceedings of the 3rd innovations in theoretical computer science conference*, January 2012, 214-226
- Fairfl: A fair federated learning approach to reducing demographic bias in privacy-sensitive classification models. **ZHANG, D. Y.** ; **KOU, Z.** ; **WANG, D.** 2020 IEEE International Conference on Big Data (Big Data). IEEE., December 2020, 1051-1060

- **EZZELDIN, Y. H.** ; **YAN, S.** ; **HE, C.** ; **FERRARA, E.** ; **AVESTIMEHR, A. S.** Fairfed: Enabling group fairness in federated learning. *Proceedings of the AAAI Conference on Artificial Intelligence*, June 2023, vol. 37 (6), 7494-7502
- **CUI, S.** ; **PAN, W.** ; **LIANG, J.** ; **ZHANG, C.** ; **WANG, F.** Addressing algorithmic disparity and performance inconsistency in federated learning. *Advances in Neural Information Processing Systems*, 2021, vol. 34, 26091-26102
- **ABAY, A.** ; **ZHOU, Y.** ; **BARACALDO, N.** ; **RAJAMONI, S.** ; **CHUBA, E.** ; **LUDWIG, H.** Mitigating bias in federated learning. *arXiv preprint arXiv:2012.02447*, 2020
- **GÁLVEZ, B. R.** ; **GRANQVIST, F.** ; **VAN DALEN, R.** ; **SEIGEL, M.** Enforcing fairness in private federated learning via the modified method of differential multipliers. *NeurIPS 2021 Workshop Privacy in Machine Learning*, November 2021
- Federated learning meets fairness and differential privacy. **PADALA, M.** ; **DAMLE, S.** ; **GUJAR, S.** Neural Information Processing: 28th International Conference, ICONIP 2021. Springer International Publishing, 2021, 692-699
- **PENTYALA, S.** ; **NEOPHYTOU, N.** ; **NASCIMENTO, A.** ; **DE COCK, M.** ; **FARNADI, G.** Privfairfl: Privacy-preserving group fairness in federated learning. *arXiv preprint arXiv:2205.11584*, 2022
- **DWORK, CYNTHIA** ; **MCSHERRY, FRANK** ; **NISSIM, KOBBI** ; **SMITH, ADAM**. *Calibrating Noise to Sensitivity in Private Data Analysis*, 2006
- **DWORK, CYNTHIA** ; **KENTHAPADI, KRISHNARAM** ; **MCSHERRY, FRANK** ; **MIRONOV, ILYA** ; **NAOR, MONI**. *Our Data, Ourselves: Privacy Via Distributed Noise Generation*, 2006
- **H. BRENDAN MCMAHAN** ; **EIDER MOORE** ; **DANIEL RAMAGE** ; **SETH HAMPSON** ; **BLAISE AGÜERA Y AREAS**. *Communication-Efficient Learning of Deep Networks from Decentralized Data*, 2016
- **ASHKAN YOUSEFPOUR** ; **IGOR SHILOV** ; **ALEXANDRE SABLAYROLLES** ; **DAVIDE TESTUGGINE** ; **KARTHIK PRASAD** ; **MANI MALEK** ; **JOHN NGUYEN** ; **SAYAN GHOSH** ; **AKASH BHARADWAJ** ; **JESSICA ZHAO**. *Opacus: User-Friendly Differential Privacy Library in PyTorch*, 2022
- **DWORK, CYNTHIA** ; **ROTH, AARON**. *The Algorithmic Foundations of Differential Privacy*, 2014